## Europäisches Patentamt

## European Patent Office

## Office européen des brevets

(19)

(11) Veröffentlichungsnummer: **0 033 756**
**A1**

(12) **EUROPÄISCHE PATENTANMELDUNG**

(21) Anmeldenummer: **80104331.6**

(22) Anmeldetag: **23.07.80**

(51) Int. Cl.³: **F 24 J 3/02**, F 24 D 11/02,
G 05 D 23/00

(30) Priorität: **06.02.80 DE 3004324**

(43) Veröffentlichungstag der Anmeldung: **19.08.81**
**Patentblatt 81/33**

(84) Benannte Vertragsstaaten: **AT BE CH DE FR GB IT LI LU NL SE**

(71) Anmelder: **Ingenieurbüro Josef Probst, Freyung 1, D-8482 Neustadt a.d. Waldnaab (DE)**

(72) Erfinder: **Probst, Josef, Ziegelweg 4, D-8481 Ullersricht (DE)**

(74) Vertreter: **Liedl, Gerhard et al, Steinsdorfstrasse 21-22, D-8000 München 22 (DE)**

(54) Vorrichtung zur Regelung einer Heizungsanlage mit wenigstens einer Einrichtung zur Gewinnung von Wärme aus einem Absorber.

(57) Vorrichtung zur Regelung einer Heizungsanlage mit wenigstens einer Einrichtung zur Gewinnung von Wärme aus einem Absorber (3), einer Wärmepumpe (2), einem Raumheizkreis, einem Gebrauchswasserheizkreis, einer Wärmespeichereinrichtung (4), einer Umwälzpumpe (1) (Solepumpe) für den von einer Sole durchflossenen Absorberkreis, einer Umwälzpumpe (18) für den Raumheizkreis und den Gebrauchswasserheizkreis und entsprechenden Umschaltventilen zur Einstellung der einzelnen Funktionen der Heizungsanlage, bei der die Durchflußgeschwindigkeit der Sole in der Umwälzpumpe (Solepumpe) (1) für den Absorberkreis und in der Soleleitung des Verdampfers der Wärmepumpe (2) auf einen Wert von 0,1 bis 1,8 m/s durch entsprechende Leistungssteuerung der Solepumpe (1) in Abhängigkeit von der laufenden Bestimmung des Viskositätswertes der Sole eingestellt wird, so daß eine maximale Leistungsabgabe vom Absorber an den Verbraucher (6) und/oder die Wärmespeichereinrichtung (4) gewährleistet ist.

EP 0 033 756 A1

ACTORUM AG

0033756

- 1 -

## Vorrichtung zur Regelung einer Heizungsanlage mit wenigstens einer Einrichtung zur Gewinnung von Wärme aus einem Absorber

Die Erfindung betrifft eine Vorrichtung zur Regelung einer Heizungsanlage mit wenigstens einer Einrichtung zur Gewinnung von Wärme aus einem Absorber, einer Wärmepumpe, einem einen Verbraucher aufweisenden Raumheizkreis, einem Gebrauchswasserheizkreis, einer Wärmespeichereinrichtung, einer Umwälzpumpe (Solepumpe) für den von einer Sole durchflossenen Absorberkreis, einer Umwälzpumpe für den Raumheizkreis und den Gebrauchswasserheizkreis und entsprechenden Umschaltventilen zur Einstellung der einzelnen Funktionen der Heizungsanlage.

In nördlichen Breitengraden reicht die von der Sonne gelieferte Strahlungswärme nicht aus, den Energiebedarf für eine Heizungsanlage voll abzudecken. Man ist daher dazu übergegangen, in der Umwelt, beispielsweise in der Erde, im Wasser oder in der Luft, auf niedrigem Temperaturniveau gespeicherte Sonnenwärme mit Hilfe von Wärmepumpen zu nutzen. Zusätzlich zu diesen in der Umwelt vorhandenen Wärmespeichern werden noch Absorber verwendet, die die Nutzbarmachung direkter und indirekter Sonnenenergie ermöglichen. Diese Absorber, insbesondere Solarabsorber, unterliegen relativ starken Temperaturschwankungen, was unweigerlich zu Störungen und erhöhtem Verschleiß bei der Wärmepumpe führt.

Aufgabe der Erfindung ist es daher, eine Vorrichtung der vorstehend genannten Art zu schaffen, bei der trotz unterschiedlicher und schwankender Temperaturen des den Absorber, die Wärmepumpe und die Wärmespeicher durchströmenden Wärmetransportmediums, das im folgenden als Sole bezeich-

E 97

net wird, einen ungestörten Wärmepumpenbetrieb bei verringertem Verschleiß zu ermöglichen.

Diese Aufgabe wird erfindungsgemäß bei der vorstehend genannten Vorrichtung dadurch gelöst, daß die Durchflußgeschwindigkeit der Sole in der Umwälzpumpe bzw. Solepumpe für den Absorberkreis und in der Soleleitung des Verdampfers der Umwälzpumpe auf einen Wert von 0,1 bis 1,8 m/s eingestellt ist durch entsprechende Leistungssteuerung der Solepumpe in Abhängigkeit von der laufenden Bestimmung des Viskositätswertes der Sole.

Unter Sole wird ein Wärmeträger in Form einer tiefgefrierenden Flüssigkeit verstanden, die nicht nur eine Lösung von Salzen in Wasser, sondern beispielsweise auch ein Gel-Wassergemisch sein kann.

Die Viskosität der Sole, welche aus einem handelsüblichen Gel-Wassergemisch bestehen kann, läßt sich durch eine Temperaturmessung der Sole bestimmen. Die Temperaturmessung der Sole wird hierzu am Eingang und Ausgang der durch den Verdampfer der Wärmepumpe geführten Soleleitung vorgenommen und der Mittelwert der beiden ermittelten Soletemperaturen für die Viskositätsbestimmung verwendet.

In vorteilhafter Weise lassen sich bei der Erfindung in Abhängigkeit von Temperaturmessungen der Sole und des Heizwassers an bestimmten Stellen der Heizungsanlage die Soledurchflußgeschwindigkeit auf einen optimalen Wert und die Funktionen der Heizungsanlage steuern. Es kann hierzu eine temperaturabhängig arbeitende Auswerte- und Steuerschaltung vorgesehen sein, die an geeigneten Stellen des Leitungssystems vorgesehene Ventile entsprechend betätigt.

Dadurch, daß man die Solepumpe vor den Verdampfer und insbesondere zwischen der Wärmespeichereinrichtung und dem Verdampfer der Wärmepumpe schaltet, ist es möglich, für den Absorberkreis, der den Absorber, die Wärmespeichereinrichtung, den Verdampfer der Wärmepumpe und die Solepumpe umfaßt, nur mit einer einzigen Umwälzpumpe, die hier mit Solepumpe bezeichnet ist, auszukommen. Als Absorber kommen nicht nur Solarabsorber,

E 97

wie beispielsweise Sonnenkollektoren, in Frage, sondern auch wärmeaufnehmende Dächer, Hauswandverkleidungen, Zäune und dgl. Für die Wärmespeichereinrichtung eignen sich Speicher in der Umwelt (Erde, Wasser, Luft) sowie auch Wasserspeicher, insbesondere Brauchwasserspeicher.

Insbesondere wenn der Verbraucher als Niedrigtemperaturheizung, insbesondere als Fußbodenheizung, Konvektoren oder Gebläsekonvektoren ausgebildet ist, läßt sich eine sogenannte monovalente Heizung (Vollheizung), die ohne Zusatzheizung auskommt, erzielen.

Bei Verwendung einer Zusatzheizung ist es von Vorteil, an die Verflüssigerseite der Wärmepumpe einen Pufferspeicher parallel zum Verbraucher anzuschließen. Die Wärmepumpe ist, wie die Ansprüche 17 bis 20 und 24 zeigen, erfinderisch ausgebildet.

Um insbesondere beim Einschalten der Wärmepumpe möglichst rasch auf eine optimale Leistung der Wärmepumpe zu kommen, ist es von Vorteil, parallel zum Verbraucher an die Verflüssigerseite der Wärmepumpe eine Beipaß-Leitung zu legen, durch die eine Überbrückung des Verbrauchers möglich ist. In Abhängigkeit von der Differenz zwischen der Temperatur des Heizwassers, das den Verflüssiger verläßt, und der Temperatur des Heizwassers, das in den Verflüssiger der Wärmepumpe zurückströmt, wird das Heizwasser, insbesondere beim Kaltstart der Wärmepumpe, zunächst durch die Beipaß-Leitung geleitet und dann, wenn eine optimale Wärmeabgabe durch die Wärmepumpe gewährleistet ist, das Heizwasser durch den Verbraucher geleitet.

Ferner ist zwischen dem Expansionsventil der Wärmepumpe und dem Verdampfer der Wärmepumpe ein Regelventil zwischengeschaltet, das in Abhängigkeit von der Differenz der Temperatur der in den Verdampfer einlaufenden Sole von der Temperatur der den Verdampfer verlassenden Sole gesteuert wird, wobei das Expansionsventil im Entspannungszweig der Wärmepumpe auch entfallen kann, wenn gewährleistet ist, daß in den Verdichter das Arbeitsmittel nur als Dampf eingeleitet wird.

E 97

In vorteilhafter Weise kann eine Überwachung des Verdichterbetriebes, insbesondere eine Überwachungseinrichtung für den Anlauf des Verdichters vorgesehen sein. Durch diese wird gewährleistet, daß im Schmieröl des Verdichters nur ein bestimmter Höchstanteil an flüssigem Arbeitsmittel vorhanden ist. Ein Nachverdampfen von flüssigem Arbeitsmittel nach Anlauf des Verdichters, durch das der Verflüssigungsvorgang beeinträchtigt werden kann bzw. das in den Lagern zu Lagerschäden führen kann, wird verhindert. Ein gesicherter Anlauf des Verdichters ist in aller Regel dann noch gewährleistet, wenn der flüssige Kältemittelanteil 15 % im Schmieröl des Verdichters nicht überschreitet. Zur Überwachung des flüssigen Kältemittelanteils im Schmieröl läßt sich im Ölsumpf des Verdichters eine Temperaturüberwachungseinrichtung vorsehen, die als Wärmefühler ausgebildet sein kann und die über eine Steuerschaltung auf eine im Ölsumpf vorgesehene Heizeinrichtung einwirkt, in der Weise, daß dann, wenn die Temperatur am Fühler bei entsprechendem Stromfluß durch den Fühler einen bestimmten Wert unterschreitet (=Änderung des Wertes), dies ein Anzeichen dafür ist, daß ein zu hoher Anteil an flüssigem Kältemittel im Schmieröl des Verdichters vorhanden ist und damit die Heizung eingeschaltet wird. Eine derartige rein thermostatisch geregelte Ölsumpfheizung erfordert nur einen äußerst geringen Stromverbrauch, da die Ölheizung nur dann in Betrieb ist, wenn sie tatsächlich zum Betrieb benötigt wird.

Auch ist es möglich, den Temperaturunterschied zwischen dem Arbeitsmittel im Verdampfer und dem Schmieröl des Verdichters zu ermitteln und als Kriterium für die Einschaltung der Heizung im Ölsumpf des Verdichters heranzuziehen. Auch dadurch wird verhindert, daß in diesem Ölsumpf der Anteil an flüssigem Arbeitsmittel der Wärmepumpe zu hoch ansteigt, wodurch, wie schon erläutert wurde, der Anlauf des Verdichters und der Betrieb des Verdichters beeinträchtigt werden kann. Bei gebräuchlichen Arbeitsmitteln ist ein Temperaturunterschied von $20^{\circ}$K zwischen dem Arbeitsmittel im Verdampfer und dem Schmieröl im Ölsumpf des Verdichters ein Kriterium für das Einschalten der Heizung.

E 97

0033756

In den beiliegenden Figuren sind Ausführungsbeispiele der Erfindung dargestellt. Anhand dieser Figuren soll die Erfindung noch näher erläutert werden. Es zeigen:

Fig. 1                    die schematische Darstellung einer Heizungsanlage als Ausführungsbeispiel der Erfindung;

Fig. 2, 2a, 2b und 3    Funktionen des in der Fig. 1 dargestellten Heizungssystems;

Fig. 4                    ein Ausführungsbeispiel, bei dem eine Zusatzheizung mit Pufferspeicher zur Anwendung kommt;

Fig. 5                    ein Ausführungsbeispiel einer Wärmepumpe, die bei der Erfindung zum Einsatz kommen kann;

Fig. 6                    Betriebszustände bei bestimmten Soletemperaturen im Speicher und Absorber;

Fig. 7                    ein Ausführungsbeispiel der Wärmepumpe mit bestimmter räumlicher Anordnung der Wärmepumpenbestandteile;

Fig. 8                    eine Überwachungseinrichtung mit nur einem Temperaturfühler im Ölsumpf und

Fig. 9                    eine Überwachungseinrichtung, bei der der Temperaturunterschied zwischen dem Arbeitsmittel im Verdampfer und dem Schmieröl im Ölsumpf des Verdichters festgestellt wird.

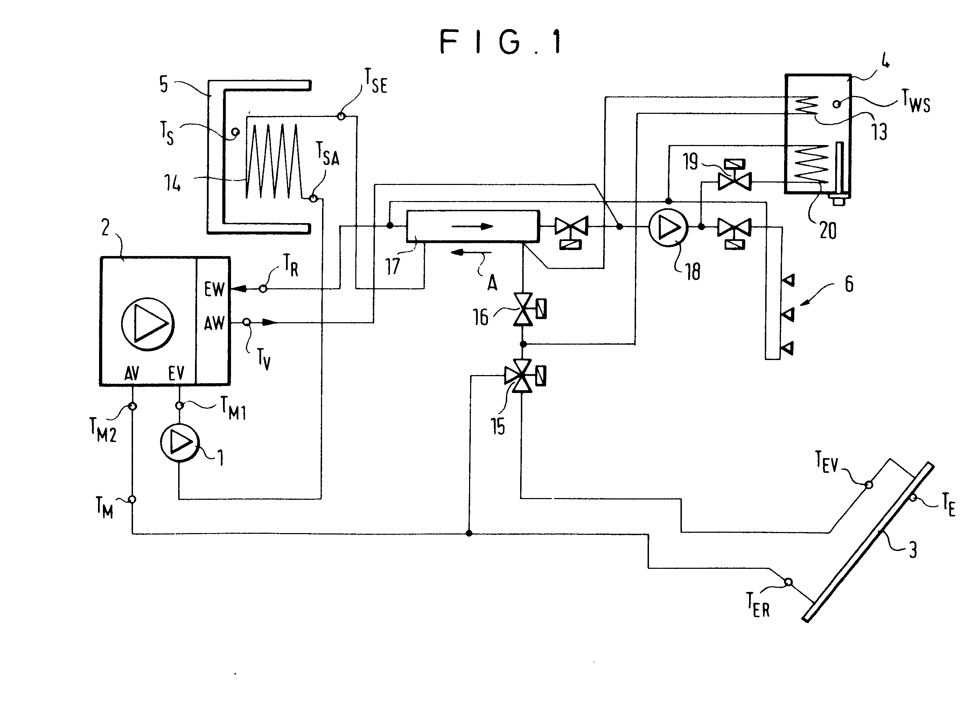

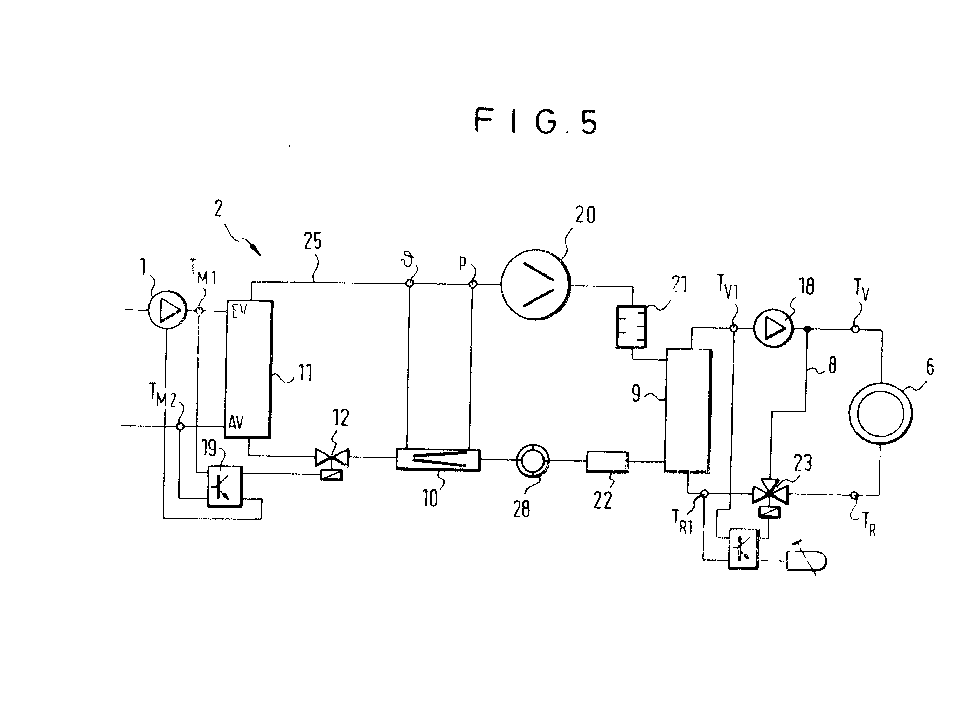

Bei dem in der Fig. 1 dargestellten Ausführungsbeispiel einer Heizungsanlage befinden sich in dem von der Sole durchflossenen Absorberkreis eine Solepumpe 1, ein Verdampfer 11 (Fig. 5) der Wärmepumpe 2, dessen Eingangsseite für die Soleleitung mit EV und dessen Auslaßseite für die

E 97

Soleleitung mit AV in der Fig. 1 bezeichnet sind, ein Absorber 3, ein Wärmetauscher 13 im oberen Teil eines Warmwasserspeichers 4, ein Wärmetauscher 14 in einem zur Umwelt gehörenden Speicher 5, beispielsweise einem Erd-Latent-Speicher. Außerdem befindet sich die eine Seite eines Wärmeaustauschers 17 im von der Sole in Richtung eines Pfeiles A durchflossenen Absorberkreises.

Der Raumheizkreis besitzt einen Verbraucher 6, der als Niedrigtemperaturheizung, beispielsweise Fußbodenheizung, ausgebildet sein kann. Dieser ist an die Verflüssigerseite der Wärmepumpe 2 angeschlossen. Die Heizflüssigkeit, insbesondere das Heizwasser, welches zur Erwärmung des Verbrauchers 6 dient, strömt an einer Einlaßseite EW in den Verflüssiger bzw. Kondensator 9 (Fig. 5) der Wärmepumpe 2 ein und verläßt den Kondensator 9 an der Auslaßseite AW. Der Transport der Heizflüssigkeit im Raumheizkreis erfolgt mit Hilfe einer als Umwälzpumpe ausgebildeten Heizpumpe 18. Über ein Ventil 19 kann ein Wärmetauscher 20 im unteren Teil des Warmwasserspeichers 4 in den Raumheizkreis parallel zum Verbraucher 6 geschaltet werden.

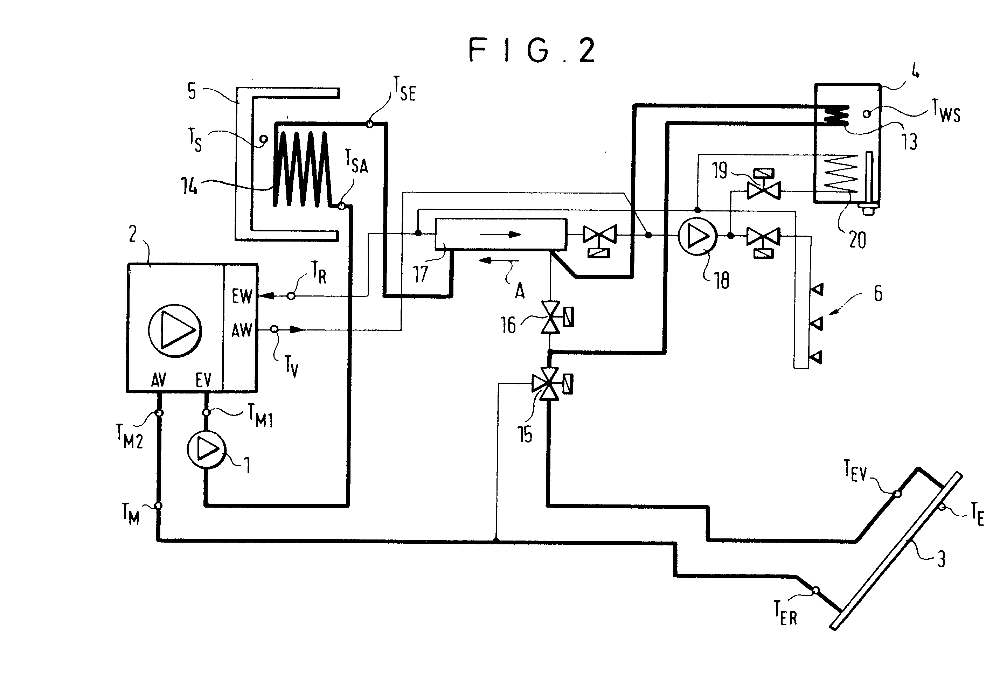

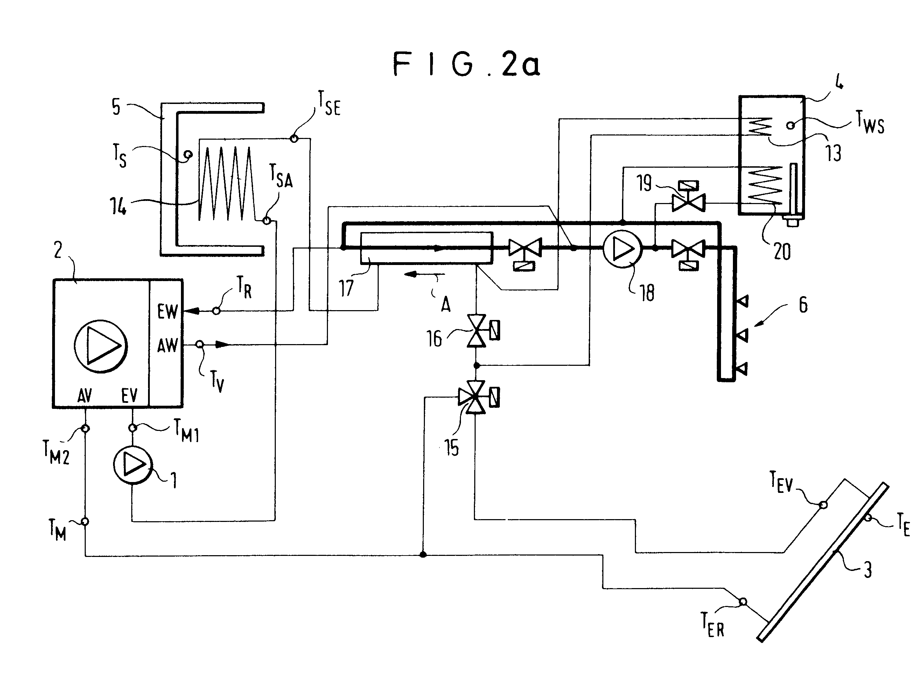

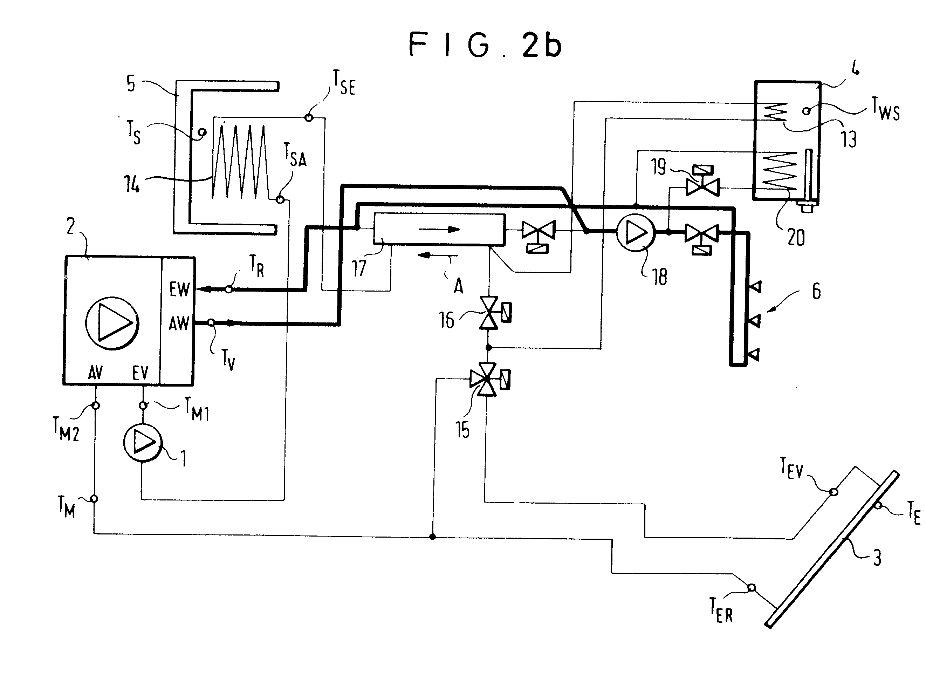

In der Fig. 2 ist die Funktion "Laden" des Speichers 5 und des Warmwasserspeichers 4, die in den Absorberkreis geschaltet sind, dargestellt. Diese Funktion der Heizungsanlage ergibt sich, wenn die Temperatur des Absorbers 3, welche mit Hilfe einer Temperaturmeßeinrichtung $T_E$ gemessen werden kann, größer ist als die Temperaturen des Speichers 5 bzw. des Wassers im Warmwasserspeicher 4, welche mit Temperaturmeßfühlern $T_S$ bzw. $T_{WS}$ ermittelt werden. Die Sole strömt dabei über ein relativ träge arbeitendes Ventil 15 in die Wärmetauscher 13 und 14 in den Speichern 4 und 5. Falls das Wasser im Warmwasserspeicher 4 eine höhere Temperatur aufweist als die vom Absorber 3 gelieferte Sole, wird ein Ventil 16 auf Durchlaß geschaltet, so daß dann nur noch eine Aufladung des Speichers 5 erfolgt. Am Soleeingang des Speichers 5 befindet sich ein Temperaturmeßfühler $T_{SE}$ und am Ausgang ein Temperaturmeßfühler $T_{SA}$.

In der Fig. 2a ist der Heizkreis dargestellt, wenn die Aufheizung des Verbrauchers 6 nur über den Wärmetauscher 17 erfolgt.

E 97

In der Fig. 2 ist dargestellt, wenn die Aufheizung des Verbrauchers 6 unter Zuhilfenahme der Wärmepumpe 2 durchgeführt wird.

Voraussetzung für die Funktion "Laden" ist, daß die Temperatur der Sole, die den Absorber 3 verläßt, und welche mit Hilfe der Meßeinrichtung $T_{EV}$ gemessen wird, größer ist als die Temperatur der Sole, die in den Absorber 3 zurückfließt und mit dem Temperaturmeßgerät $T_{ER}$ gemessen wird. Ferner muß, wie schon erwähnt wurde, die Temperatur des Absorbers 3 größer sein als die des Speichers. Außerdem ist die Temperatur an der Einlaufseite EV des Verdampfers in der Wärmepumpe 2, welche mit dem Temperaturmeßgerät $T_R$ gemessen wird, größer als eine von der Art der Sole abhängige Temperaturführungsgröße $X_S$, die beispielsweise etwa $-10^0C$ sein kann.

Für die Funktion "Heizen" ist Voraussetzung, daß die Temperatur des Heizwassers in Abhängigkeit davon, ob der Verbraucher eine Niedertemperaturheizung, beispielsweise Fußbodenheizung oder eine Niedertemperaturkonvektorenheizung ist, an der Ausgangsseite oder der Eingangsseite des Kondensators 9 in der Wärmepumpe 2, welche mit dem Temperaturmeßgerät $T_V$ bzw. $T_R$ gemessen wird, kleiner ist als die auf den Verbraucher bezogene Temperaturführungsgröße $X_{SH}$. Der Betrieb ist dabei so, daß nach Einschalten der Solepumpe 1 eine gewisse Zeit $t_{x1}$ verstreicht, bis die Heizpumpe 18 eingeschaltet wird, und nach Einschalten der Heizpumpe 18 erfolgt nach Ablauf einer weiteren Zeitspanne $t_{x2}$ das Einschalten der Wärmepumpe 2.

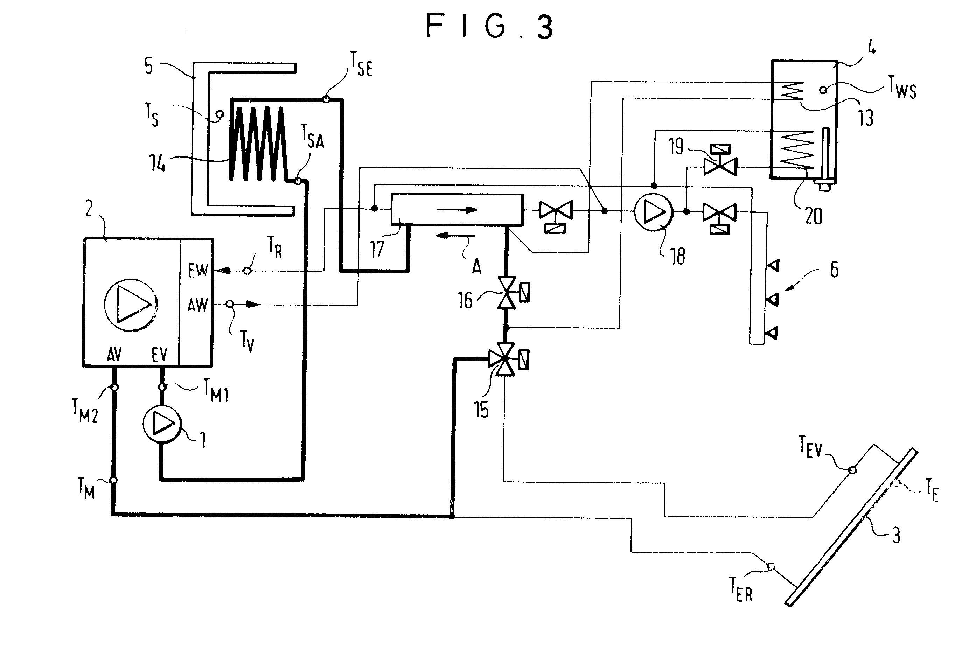

Sobald die Temperaturmessung an den Meßeinrichtungen $T_{EV}$ und $T_{ER}$ ergibt, daß die Temperatur der den Absorber 3 verlassenden Sole geringer oder gleich der Temperatur der in den Absorber 3 zurückfließenden Sole ist, wird durch Umschalten des relativ träge arbeitenden Ventiles 15, wie in Fig. 3 gezeigt, der Absorber 3 aus dem Kreislauf abgetrennt, so daß Wärme nur noch dem Speicher 5 entnommen wird oder eine Mischung aus der vom Speicher und vom Absorber kommenden Sole hergestellt wird. Sobald die Temperatur der den Absorber 3 verlassenden Sole höher liegt als die in den Absorber zurückströmenden Sole, wird der Absorber wieder in den Kreislauf durch entsprechende Betätigung des Ventiles 15 eingeschaltet.

E 97

Wenn die Temperatur am Temperaturfühler $T_M$ niedriger liegt als die Temperaturführungsgröße $X_S$, wird ebenfalls der Absorber 3, wie in Fig. 3 dargestellt, aus dem Kreislauf durch entsprechende Betätigung des Ventiles 15 abgetrennt, und es beginnt eine Zeit $t_{x3}$ zu laufen, nach deren Ablauf überprüft wird, ob die Temperatur am Temperaturfühler $T_M$ immer noch geringer ist als die Temperturführungsgröße $X_S$. Falls nach Ablauf dieser Zeit die Temperatur am Meßfühler $T_M$ immer noch geringer als die Temperaturführungsgröße $X_S$ ist, wird die Solepumpe und die Wärmepumpe 2 abgeschaltet.

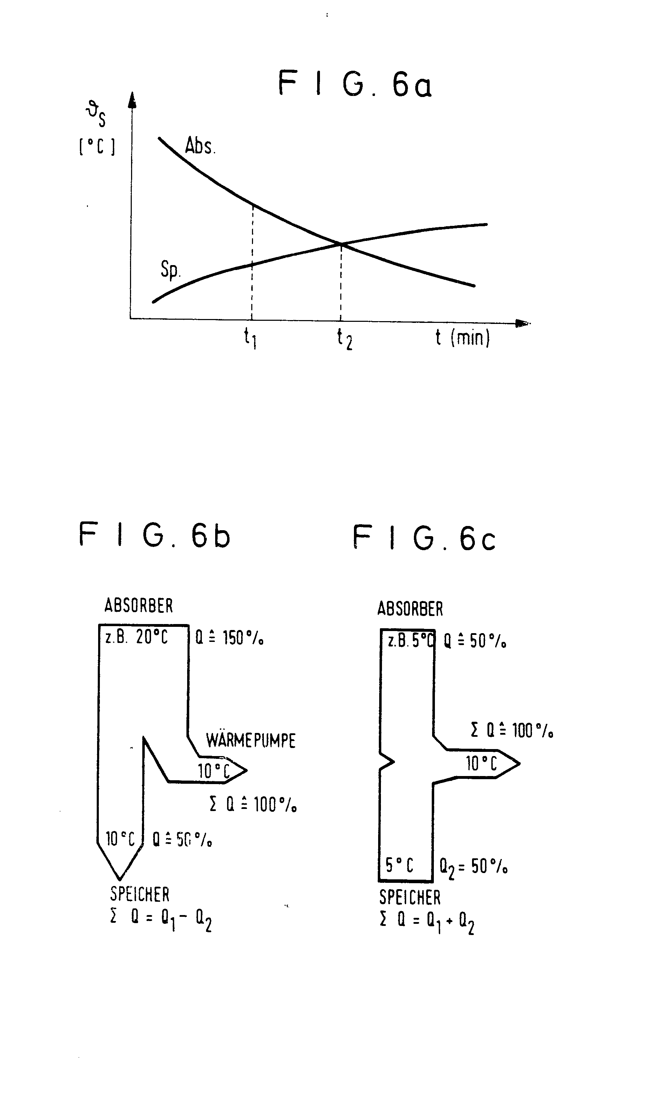

Wenn nach Ablauf der Wiedereinschaltverzögerung der Wärmepumpe die Temperatur $T_R$ bzw. $T_V$ kleiner ist als $X_{SH}$, so beginnt ein neuer Ablauf der Funktion "Heizen". Die letztgenannten drei Vorgänge können dabei maximal dreimal in einer Zeit von 24 Stunden wiederholt werden. Während der Funktion "Heizen" ist das Laden der Speichereinrichtung nur dann unterbrochen, wenn die Absorbertemperatur kleiner ist als die Speichertemperatur (Fig. 6a, b, c).

In der Fig. 6a ist der zeitliche Verlauf der Soletemperatur $\vartheta_S$ des Absorbers (Abs.) und des Speichers (Sp.) dargestellt. In der Fig. 6b ist schematisch der Betrieb gezeigt zum Zeitpunkt $t_1$ in der Fig. 6a, wobei sowohl die Funktion "Heizen" als auch die Funktion "Laden" des Speichers herrscht und etwa 50 % der der Wärmepumpe zur Verfügung gestellten Wärmemenge, die aus dem Absorber 3 geliefert wird, dem Speicher 4 bzw. 5 zur Verfügung gestellt werden. In der Fig. 6c ist der Betrieb zum Zeitpunkt $t_2$ dargestellt, an welchem die Soletemperatur im Speicher und im Absorber etwa gleich sind, so daß der Wärmepumpe sowohl vom Absorber als auch vom Speicher jeweils etwa 50 % der benötigten Wärmemenge beim Heizen zur Verfügung gestellt werden.

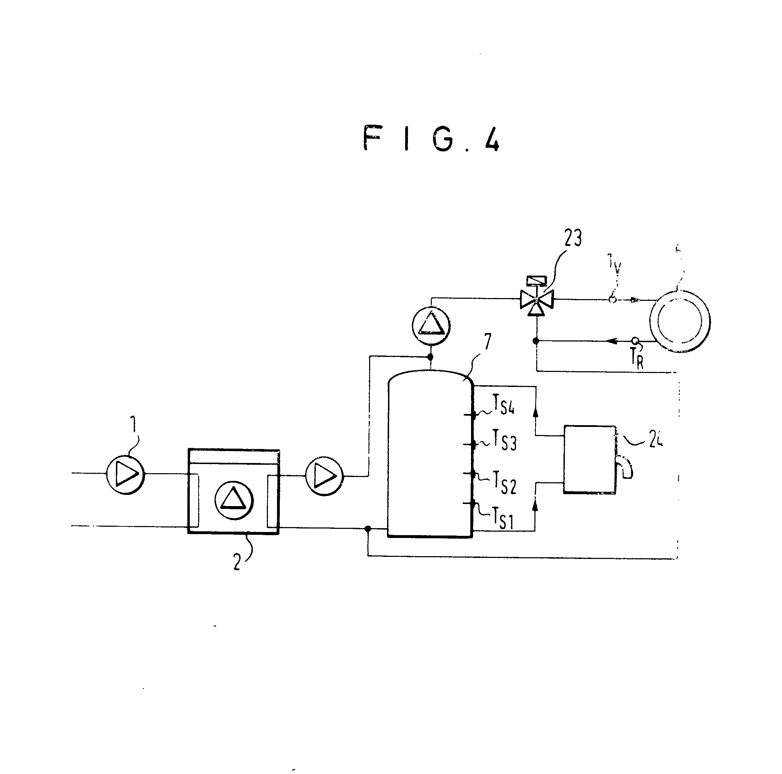

Während das vorstehend beschriebene Ausführungsbeispiel für einen monovalenten Heizungsbetrieb, d.h. ohne Zuhilfenahme einer Zusatzheizung, als Vollheizung in Verbindung beispielsweise einer Fußbodenheizung betrieben werden kann, ist in der Fig. 4 ein Ausführungsbeispiel dargestellt, das für einen bivalenten Heizungsbetrieb mit Zusatzheizung 24 oder Niedertem-

E 97

peraturkonvektorenheizung ohne Zusatzheizung geeignet ist. Hierbei wird, wie in der Fig. 4 dargestellt ist, ein Pufferspeicher 7 an die Verflüssigerseite der Wärmepumpe 2 parallel zum Verbraucher 6 angeschlossen. Der Pufferspeicher, der als Wassertank ausgebildet ist, besitzt mehrere in verschiedenen Höhen vorgesehene Temperaturmeßfühler $T_{S1}$, $T_{S2}$, $T_{S3}$, $T_{S4}$, denen entsprechende voreinstellbare Temperaturwerte zugeordnet sind. Bei eingeschalteter Zusatzheizung (bivalenter Betrieb) wird nur bis $T_{S4}$ geladen. Bei Wärmepumpenbetrieb und bei Hochtarif-Betrieb wird bis $T_{S3}$ geladen. Bei Wärmepumpenbetrieb und Niedertarif-Betrieb wird bis $T_{S2}$ geladen. Wenn die Temperatur unter $T_{S1}$ sinkt, wird in jedem Fall geladen.

Diese Auflageregelung ist nur möglich, wenn als Pufferspeicher im Durchmesser kleine und relativ hohe Speicher verwendet werden, so daß die Temperaturschichtung von unten nach oben kontinuierlich ist, wobei eine verwirbelungsfreie Zu- und Abführung des Heizwassers gewährleistet sein soll. Ein geeignetes Verhältnis von Höhe zu Durchmesser der Speicher ist 3 bis 4 : 1. Es können auch mehrere Pufferspeicher parallel geschaltet werden.

Der Betrieb der Solepumpe 1 ist direkt abhängig von der Viskosität der Sole, die hinwiederum proportional dem Temperaturmittelwert der Sole ist. Infolgedessen läßt sich auch der Betrieb der Solepumpe temperaturabhängig gestalten, wobei ein Mittelwert gebildet wird von den Temperaturen, die die Sole an der Einlaßseite EV des Verdampfers in der Wärmepumpe 2 besitzt. Diese Temperatur wird mit Hilfe eines Temperaturmeßfühlers $T_{M1}$ gemessen. Die zweite Temperatur wird an der Auslaßseite AV des Verdampfers in der Wärmepumpe 2 mit Hilfe eines Temperaturmeßfühlers $T_{M2}$ gemessen. Von den beiden Temperaturen wird der Mittelwert gebildet, der dann für die Steuerung der Pumpenleistung verwendet wird. Des weiteren wird als Regelkriterium die vom Absorber abgegebene Leistung (pro Zeiteinheit abgegebene Wärmemenge) verwendet, da die Ausbeute aus dem Absorber vom Durchfluß der Sole durch die Absorberkanäle mitbestimmt wird.

Diese Steuerung kann beispielsweise als Phasenanschnittssteuerung bei Wechselstrommotoren und als Gleichstromregelung bei Gleichstrommotoren ausgebildet sein und ist, wie in Fig. 5 dargestellt, mit 19 bezeichnet.

E 97

In der Fig. 5 ist im einzelnen die Wärmepumpe 2 dargestellt. Diese besitzt in herkömmlicher Weise einen Verdampfer 11, einen Verdichter 20, eine zwischen den Kondensator 9 und den Verdichter 20 geschaltete Dämpfereinrichtung 21, einen Trockner 22 und schließlich ein Expansionsventil 10, dessen Betrieb in Abhängigkeit von einem Temperaturfühler $\vartheta$ und einer Druckmeßeinrichtung $\dot{p}$ in der Leitung zwischen dem Verdampfer 11 und dem Verdichter 20 durchgeführt wird. Zwischen dem Expansionsventil 10 und dem Verdampfer 11 befindet sich ein Regelventil 12, das in Abhängigkeit von der Temperaturdifferenz der Sole am Einlaß EV des Verdampfers 11 und am Auslaß AV gesteuert wird.

Ferner ist, wie aus der Fig. 5 zu ersehen ist, eine Beipaßleitung 8 an der Verflüssigerseite der Wärmepumpe 2 vorgesehen, die den Verbraucher 6 überbrücken kann. Hierzu ist noch ein Ventil 23 vorhanden, das in Abhängigkeit von der Temperaturdifferenz des Heizwassers an der Auslaßseite $T_{V1}$ und an der Einlaßseite $T_{R1}$ des Kondensators 9 erfolgt.

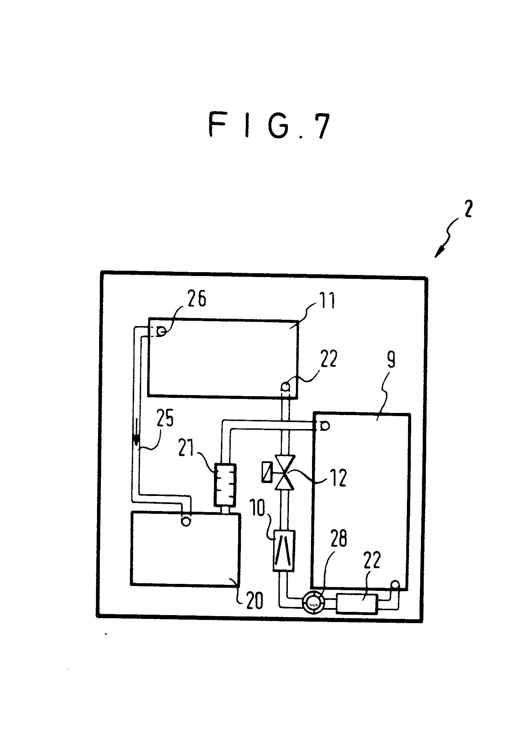

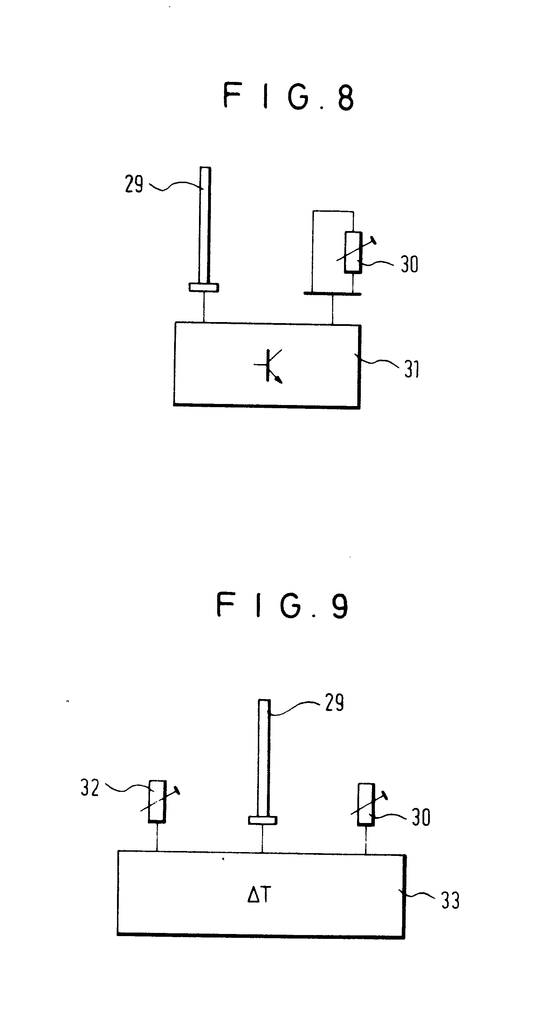

In der Fig. 7 ist die räumliche Anordnung der Bestandteile der Wärmepumpe 2 dargestellt. Der Verdampfer 11 ist bei diesem Ausführungsbeispiel räumlich höher angeordnet als der Verdichter 20, wobei die Saugleitung 25 am Verdampfer 11 einen Anschluß 26 besitzt, der höher liegt als der Anschluß 27 für die Leitung des Entspannungszweiges der Wärmepumpe. Wie schon erwähnt, können sich im Entspannungszweig das Reglerventil 12 und das Expansionsventil 10 befinden. Durch die spezielle Anordnung des Verdampfers 11 und des Verdichters 20 sowie der Anschlüsse 26 und 27 wird erzielt, daß das Arbeitsmedium der Wärmepumpe nicht in flüssiger Form in den Verdichter gelangt, sondern nur dampfförmiges Arbeitsmedium dem Verdichter 20 zugeleitet wird. In der Fig. 7 sind noch dargestellt der Dämpfer 21 zur Geräuschdämpfung und der Kondensator 9 mit dem Trockner 22 und einem Schauglas 28, mit dem der Betrieb der Wärmepumpe visuell überwacht werden kann. In der Fig. 8 ist eine Heizeinrichtung 29 gezeigt, die das Schmieröl im Ölsumpf des Verdichters aufheizen kann. Die Einschaltung der Heizeinrichtung 29 erfolgt in Abhängigkeit von der Widerstandsgröße eines Temperaturfühlers 30, der beispielsweise als Heizwiderstand mit negativen Temperaturkoeffizienten ausgebildet sein kann. In Abhängigkeit vom Wider-

E 97

standswert dieses Heizwiderstandes schaltet eine Steuerschaltung 31 die Heizeinrichtung 29 an, wenn die Temperatur des Schmieröles im Ölsumpf des Verdichters 20 unter einen bestimmten Wert gesunken ist. In aller Regel liegt dieser Wert um etwa $20^{\circ}K$ höher als die Temperatur, welche das Arbeitsmittel im Verdampfer 11 aufweist.

Bei der in der Fig. 9 gezeigten Schaltung werden zwei Temperaturfühler 30 und 32 verwendet, wobei der eine Temperaturfühler 32 die Temperatur des Arbeitsmittels im Verdampfer 11 ermittelt und der Temperaturfühler 30, wie im Ausführungsbeispiel der Fig. 8, die Temperatur des Schmiermittels im Ölsumpf des Verdichters 20. In Abhängigkeit vom festgestellten Temperaturunterschied, der in einer Schaltung 33 ausgewertet wird, wird die Heizung 29 im Wärmesumpf des Verdichters 20 eingeschaltet. Wenn der Temperaturunterschied zwischen dem Schmieröl im Ölsumpf des Verdichters 20 und dem Arbeitsmittel im Verdampfer 11 geringer als $20^{\circ}K$ ist, kann dies ein Anzeichen dafür sein, daß der Anteil an flüssigem Arbeitsmittel die zulässige Grenze von 15 % überstiegen hat. Es wird dann zum Verdampfen des Arbeitsmittels die Heizung 29 eingeschaltet, so daß gewährleistet ist, daß nur dampfförmiges Arbeitsmittel beim Wärmepumpenbetrieb in den Verdichter gelangt.

E 97

- 1 -

Patentansprüche:

1. Vorrichtung zur Regelung einer Heizungsanlage mit wenigstens einer Einrichtung zur Gewinnung von Wärme aus einem Absorber, einer Wärmepumpe, einem Raumheizkreis, einem Gebrauchswasserheizkreis, einer Wärmespeichereinrichtung, einer Umwälzpumpe (Solepumpe) für den von einer Sole durchflossenen Absorberkreis, einer Umwälzpumpe für den Raumheizkreis und den Gebrauchswasserheizkreis und entsprechenden Umschaltventilen zur Einstellung der einzelnen Funktionen der Heizungsanlage, dadurch gekennzeichnet,

daß die Durchflußgeschwindigkeit der Sole in der Umwälzpumpe (Solepumpe) (1) für den Absorberkreis und in der Soleleitung des Verdampfers der Wärmepumpe (2) auf einen Wert von 0,1 - 1,8 m/s durch entsprechende Leistungssteuerung der Solepumpe (1) in Abhängigkeit von der laufenden Bestimmung des Viskositätswertes der Sole eingestellt ist, so daß eine maximale Leistungsabgabe vom Absorber an den Verbraucher und/oder die Wärmespeichereinrichtung gewährleistet ist.

2. Vorrichtung nach Anspruch 1, dadurch gekennzeichnet,

daß die Viskosität der Sole durch eine Temperaturmessung der Sole bestimmt ist.

E 97

3. Vorrichtung nach Anspruch 1 oder 2, dadurch gekennzeichnet,

daß sowohl die Einstellung der Soledurchflußgeschwindigkeit als auch die Funktionen der Heizungsanlage durch eine temperaturabhängig arbeitende Auswerte- und Steuerschaltung gesteuert sind.

4. Vorrichtung nach einem der Ansprüche 1 bis 3, dadurch gekennzeichnet,

daß die Solepumpe (1) vor den Verdampfer der Wärmepumpe (2) geschaltet ist.

5. Vorrichtung nach einem der Ansprüche 1 bis 4, dadurch gekennzeichnet,

daß die Solepumpe (1) zwischen die Wärmespeichereinrichtung und den Verdampfer der Wärmepumpe geschaltet ist.

6. Vorrichtung nach einem der Ansprüche 1 bis 5, dadurch gekennzeichnet,

daß zur Bestimmung der Viskosität der Sole die Temperaturmessung der Sole am Eingang und Ausgang der durch den Verdampfer der Wärmepumpe (2) geführten Soleleitung erfolgt und der Mittelwert der beiden ermittelten Temperaturen zur Bestimmung der Viskosität dient.

7. Vorrichtung nach einem der Ansprüche 1 bis 6, dadurch gekennzeichnet,

daß die Funktion Laden des Wärmespeichers eingeschaltet wird, wenn die Absorbertemperatur über der Speichertemperatur liegt und daß beim Laden ein Temperaturunterschied zwischen dem Eingang ($T_{SE}$) der Sole in den Wärmespeicher (5) und dem Ausgang ($T_{SA}$) der Sole aus dem Wärmespeicher (5) besteht.

E 97

8. Vorrichtung nach einem der Ansprüche 1 bis 7, dadurch gekennzeichnet, daß die Funktion Heizen eingeschaltet wird, wenn die Temperatur ($T_R$ bzw. $T_V$) des Heizwassers, das die Verflüssigerseite der Wärmepumpe verläßt, niedriger ist als eine von der Art des Heizkörpers bestimmte Temperaturführungsgröße ($X_{SH}$), wobei aufeinanderfolgend in bestimmten Zeitabständen die Umwälzpumpe für den Heizkreis und dann die Wärmepumpe eingeschaltet werden.

9. Vorrichtung nach einem der Ansprüche 1 bis 8, dadurch gekennzeichnet, daß dann, wenn die Temperatur der Sole, die den Absorber verläßt, geringer ist als die Temperatur der Sole, die in den Absorber zurückfließt und/oder dann, wenn die Temperatur der Sole, die den Verdampfer der Wärmepumpe (2) verläßt, geringer ist als die durch die Art der Sole bestimmte Führungsgröße ($X_S$) der Absorber (3) aus dem Kreislauf abgetrennt wird.

10. Vorrichtung nach Anspruch 9, dadurch gekennzeichnet,

daß dann, wenn die Soletemperatur nach einem bestimmten Zeitablauf ($t_{x3}$) noch unterhalb der Temperaturführungsgröße ($X_S$) liegt, die Solepumpe (1) und die Wärmepumpe abgeschaltet werden.

11. Vorrichtung nach einem der Ansprüche 1 bis 10, dadurch gekennzeichnet, daß dann, wenn nach Ablauf der Wiedereinschaltverzögerung der Wärmepumpe die Temperatur des die Verflüssigerseite der Wärmepumpe (2) verlassenden Heizwassers niedriger ist als die von der Art des Heizkörpers abhängige Temperaturführungsgröße ($X_{SH}$) ein neuer Funktionsablauf Heizen beginnt.

E 97

12.    Vorrichtung nach einem der Ansprüche 8 bis 11, dadurch gekennzeichnet, daß die Funktionen vom Beginn des Heizens bis zur Abschaltung der Solepumpe (1) und Wärmepumpe (2) innerhalb einer Zeit von 24 Stunden in Abhängigkeit von der Art der Wärmepumpe und der Anlagenkomponenten für eine
bestimmte Anzahl, insbesondere maximal dreimal, wiederholbar sind.

13.    Vorrichtung nach einem der Ansprüche 1 bis 12, dadurch gekennzeichnet, daß bei der Funktion Heizen die Funktion Laden nur dann unterbrochen ist,
wenn die Absorbertemperatur kleiner als die Speichertemperatur ist (Fig.
6a, b, c).

14.    Vorrichtung nach einem der Ansprüche 1 bis 13, dadurch gekennzeichnet, daß die Wärmespeichereinrichtung einen Warmwasserspeicher (4) und einen
Erd-Latent-Speicher (5) aufweist.

15.    Vorrichtung nach einem der Ansprüche 1 bis 14, dadurch gekennzeichnet, daß der Verbraucher (6) eine Niedrigtemperaturheizung, insbesondere Fußbodenheizung, ist.

16.    Vorrichtung nach einem der Ansprüche 1 bis 15, dadurch gekennzeichnet, daß bei Verwendung einer Zusatzheizung (24) (z.B. Niedertemperaturkonvektorenheizung) an die Verflüssigerseite der Wärmepumpe (2) ein Pufferspeicher (7) parallel zum Verbraucher (6) angeschlossen ist (Fig. 4).

E 97

17. Vorrichtung nach einem der Ansprüche 1 bis 16, dadurch gekennzeichnet,

daß parallel zum Verbraucher (6) an die Verflüssigerseite der Wärmepumpe (2) eine Beipaß-Leitung (8) gelegt ist, so daß in Abhängigkeit von der auf die Art des Verbrauchers abgestimmte Differenz der Vorlauftemperatur ($T_{V1}$) des den Verflüssiger (Kondensator 9) verlassenden Heizwassers von der Rücklauftemperatur ($T_{R1}$) des in den Verflüssiger zurückfließenden Heizwassers das Heizwasser entweder durch den Verbraucher (6) oder durch die Beipaß-Leitung (8) geführt wird, so daß in Abstimmung mit der Verdampferleistung eine optimale Wärmeabgabe an das Heizwasser im Kondensator (9) erfolgt, wobei die Durchflußmenge durch den Kondensator (9) gleich bleibt.

18. Vorrichtung nach einem der Ansprüche 1 bis 17, dadurch gekennzeichnet,

daß im Entspannungszweig der Wärmepumpe (2) ein Regelventil (12) vorhanden ist, durch das der Temperaturunterschied zwischen der in den Verdampfer (11) der Wärmepumpe (2) einlaufenden Sole und der den Verdampfer (11) verlassenden Sole einen voreingestellten Wert aufweist, durch den gewährleistet ist, daß in den Verdichter (20) der Wärmepumpe nur dampfförmiges Arbeitsmittel eingeleitet wird.

19. Vorrichtung nach Anspruch 18, dadurch gekennzeichnet, daß im Entspannungszweig der Wärmepumpe ein Expansionsventil (10) vorhanden ist, dessen Öffnungsgrad durch den Druck und die Temperatur des dem Verdichter zugeführten dampfförmigen Arbeitsmittels steuerbar ist.

20. Vorrichtung nach Anspruch 19, dadurch gekennzeichnet, daß das Expansionsventil (10) ein durch elektrische Signale gesteuertes Ventil ist.

E 97

21. Vorrichtung nach einem der Ansprüche 1 bis 20, dadurch gekennzeichnet,

daß das Ventil (15), über welches der Soleausgang des Absorbers (3) mit der Speichereinrichtung (4 bzw. 5) verbunden ist, ein Dreiwegeventil ist, dessen dritter Anschluß mit dem Soleausgang des Verdampfers der Wärmepumpe (2) verbunden ist.

22. Vorrichtung nach Anspruch 21, dadurch gekennzeichnet,

daß das Ventil (15) ein relativ träge arbeitendes Ventil ist oder in sehr kurzer Zeit viele Betriebsänderungen regelt.

23. Vorrichtung nach Anspruch 16, dadurch gekennzeichnet,

daß das Verhältnis von Höhe zu Durchmesser des Pufferspeichers (7) so gewählt ist, daß von unten nach oben eine kontinuierliche Temperaturschichtung im Speicher vorhanden ist und insbesondere 3 bis 4 : 1 beträgt.

24. Vorrichtung nach einem der Ansprüche 1 bis 23, dadurch gekennzeichnet,

daß in der Wärmepumpe (2) der Verdampfer (11) räumlich über dem Verdichter (20) angeordnet ist, wobei die vom Verdampfer (11) zum Verdichter (20) geführte Saugleitung (25) für das dampfförmige Arbeitsmedium am Verdampfer einen Anschluß (26) besitzt, der höher liegt als der Anschluß (27) mit dem der Expansionszweig der Wärmepumpe am Verdampfer (11) angeschlossen ist (Fig. 7).

25. Vorrichtung nach einem der Ansprüche 18 bis 24, dadurch gekennzeichnet,

daß im Ölsumpf des Verdichters (20) der Wärmepumpe (2) eine Heizeinrichtung (29) vorgesehen ist, die eingeschaltet ist, wenn die Temperatur unter einen bestimmten Wert sinkt, der ein Maß für einen bestimmten Anteil an Arbeitsmittel im Schmieröl des Verdichters (20) ist.

E 97

26.    Vorrichtung nach Anspruch 25, dadurch gekennzeichnet,

daß die Heizung (29) eingeschaltet ist, wenn der Temperaturunterschied zwischen dem Arbeitsmittel im Verdampfer (11) und dem Ölsumpf des Verdichters (20) einen bestimmten Wert überschreitet.

27.    Vorrichtung nach Anspruch 25 oder 26, dadurch gekennzeichnet, daß der Anlauf des Verdichters (20) nur dann einsetzt, wenn der Anteil an flüssigem Arbeitsmittel im Schmieröl des Verdichters einen bestimmten Wert unterschreitet.

E 97

# F I G . 1

F I G . 2

FIG.2a

# FIG. 2b

0033756

FIG.3

0033756

# F I G . 4

F I G . 5

# F I G. 6a

# F I G. 6b

# F I G. 6c

# F I G . 7

# F I G . 8

29

30

K

31

# F I G . 9

29

32

30

ΔT

33

EP 80104331.6

# EUROPÄISCHER RECHERCHENBERICHT

**Europäisches Patentamt**

0033756

Nummer der Anmeldung

EP 80104331.6

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | <u>DE - A1 - 2 638 834</u> (LOTZ)<br>+ Gesamt +<br><br>-- | 1 | F 24 J 3/02<br>F 24 D 11/02<br>G 05 D 23/00 |
| | <u>DE - A1 - 2 809 425</u> (HAPPEL KG)<br>+ Seite 8, 1. Absatz - Seite 10, 1. Absatz; Fig. 1 +<br><br>-- | 1,14, 21 | |
| | <u>AT - B - 354 018</u> (VEREINIGTE METALLWERKE RANSHOFEN-BERNDORF AKTIENGESELLSCHAFT)<br>+ Gesamt +<br><br>---- | 1-3,7 | |

**RECHERCHIERTE SACHGEBIETE (Int. Cl.³)**

F 24 J 3/00
F 24 D 11/00
G 05 D 23/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. | |
|---|---|---|
| **Recherchenort** WIEN | **Abschlußdatum der Recherche** 07-04-1981 | **Prüfer** ENDLER |

EPA form 1503.1 06.78